# EUROPEAN PATENT APPLICATION

(11) **EP 3 726 931 A1**
(43) Date of publication of application: **21.10.2020**
(21) Application number: 18888706.1
(22) Date of filing: 11.12.2018
(51) Int. Cl.: H05B 33/08

(54) **METHOD FOR CONTROLLING LIGHT PROVIDED ON VEHICLE AND LIGHTING SYSTEM FOR VEHICLE**

(30) Priority: 14.12.2017 CN 201711338637
(71) Applicant: Nio Nextev Limited, Hong Kong (CN)
(72) Inventor: DONG, Yiwei, Central Hong Kong (CN); LIU, Yuxiang, Central Hong Kong (CN)
(74) Representative: SSM Sandmair
(86) International application number: PCT/CN2018/120259
(87) International publication number: WO 2019/114688

(57) **Abstract**

The invention relates to an automotive electronic technology, and in particular to a method for controlling a light provided inside a vehicle and a vehicle interior lighting system performing the method. The method according to the invention comprises the following steps: receiving a configuration parameter for an environment mode of the light; generating a control signal from the configuration parameter; and controlling an operating state of the light based on the control signal.

## Description

### Technical Field

The invention relates to an automotive electronic technology, and in particular to a method for controlling a light provided on a vehicle and a lighting system for a vehicle that performs the method.

### Background Art

With the continuous development of the automotive industry, people's requirements for vehicles are no longer limited to travelling, and requirements for many auxiliary functions or entertainment elements are also increasing. The requirements involve those for a light provided inside a vehicle, which is both a functional part and an exterior part, and is becoming a vital part of vehicle styling.

In recent years, in addition to a lighting function, the light inside the vehicle can reflect other more functions, which are in line with a user's requirements and are also desired by the industry.

### Summary of the Invention

An object of the invention is to provide a method and a device for controlling a light provided on a vehicle, to provide a rich atmosphere effect and facilitate a user in flexibly and conveniently selecting a desired effect.

According to one aspect of the invention, a method for controlling a light provided on a vehicle comprises the following steps:
receiving a configuration parameter for an environment mode of the light;
generating a control signal from the configuration parameter; and
controlling an operating state of the light based on the control signal.

Preferably, in the above method, the light is a light capable of emitting rays in three primary colours. More preferably, the light is an LED light.

Preferably, in the above method, the light is a light group comprising more than one light.

Preferably, in the above method, the environment mode comprises at least one of the following: a monochrome mode, a breathing mode, a streamer mode, and a rhythm mode.

Preferably, in the above method, a configuration parameter for the monochrome mode comprises a colour and luminance of the light.

Preferably, in the above method, a configuration parameter for the breathing mode comprises a colour, a luminance change level, and a luminance change frequency of the light.

Preferably, in the above method, a configuration parameter for the streamer mode comprises a colour sequence, luminance for each colour, and a colour switching frequency of the light.

Preferably, in the above method, a configuration parameter for the rhythm mode comprises at least one of the following: a colour, a colour change frequency, luminance, and a luminance change frequency of the light.

Preferably, in the above method, the colour of the light is determined by a tone of music played by a vehicle audio system, and/or the luminance is determined by loudness of the music played by the vehicle audio system, and/or the colour change frequency and the luminance change frequency are determined by a rhythm of the music played by the vehicle audio system.

Preferably, in the above method, the light is provided inside the vehicle.

According to another aspect of the invention, a lighting system for a vehicle comprises:
a light provided on the vehicle; and
a driving circuit coupled to the light and configured to generate a driving signal for the light based on an external control signal,
wherein the control signal is generated from a configuration parameter for an environment mode of the light.

### Brief Description of the Drawings

The foregoing and/or other aspects and advantages of the invention will be clearer and more comprehensible from the following description of various aspects with reference to the accompanying drawings, and the same or similar units in the accompanying drawings are represented by the same numerals. The accompanying drawings comprise:
FIG. 1 is a schematic block diagram of a vehicle interior lighting system according to an embodiment of the invention.
FIG. 2 is a flowchart of a method for controlling a light provided on a vehicle according to another embodiment of the invention.

### Detailed Description of Embodiments

The invention is described below more comprehensively with reference to the accompanying drawings showing schematic embodiments of the invention. However, the invention may be implemented in different forms but should be construed as being only limited to the embodiments herein. The embodiments provided in foregoing are intended to make the disclosure of this specification comprehensive and complete, so as to convey the protection scope of the invention to a person skilled in the art more comprehensively.

In this specification, the terms such as "include" and "comprise" indicate that in addition to the units and steps that are directly and clearly described in the specification and claims, other units and steps that are not directly or clearly described are not excluded in the technical solutions of the invention.

The terms such as "first" and "second" are not used to indicate sequences of units in terms of time, space, size, and the like, and are only used to distinguish between the units.

"Coupled" should be construed as comprising a case in which electrical energy or electrical signals are directly transferred between two units or a case in which electrical energy or electrical signals are indirectly transferred via one or more third units.

"Provided on a vehicle" should be broadly construed as being able to be provided at various positions on the vehicle, for example, including but not limited to the interior of the vehicle and the exterior of the vehicle.

In the embodiments of the invention described below, a light provided inside the vehicle is used as an example for description. However, a light provided outside the vehicle, such as a wheel eyebrow light provided on a hub claimed by the applicant in other patent applications, can also adopt the control method and system described herein. Further, in the example described herein, an LED light, more specifically, an RGB LED light is used as an example for description. However, all lights capable of emitting rays in three primary colours can be used as the light provided in the vehicle mentioned in the invention.

A method for controlling a light provided inside a vehicle according to the invention comprises: receiving a configuration parameter for an environment mode of the light; generating a control signal from the configuration parameter; and controlling an operating state of the light based on the control signal. The environment mode may be a monochrome mode, a breathing mode, a streamer mode, and a rhythm mode.

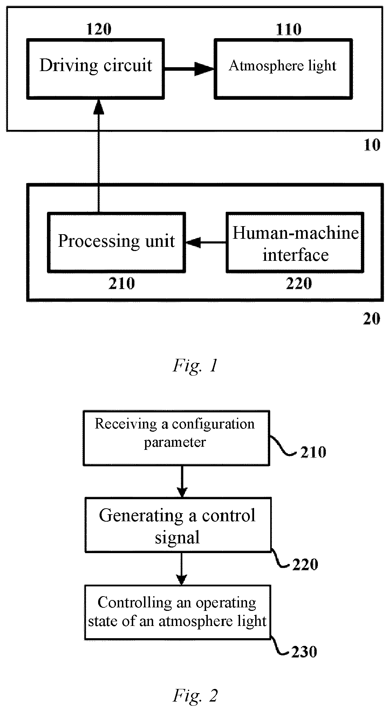

FIG. 1 is a schematic block diagram of a vehicle interior lighting system according to an embodiment of the invention.

As shown in FIG. 1, a vehicle interior lighting system 10 comprises a light 110 provided inside a vehicle and a driving circuit 120 coupled to the light 110. Optionally, the vehicle interior lighting system 10 may further comprise a processing unit that generates a control signal for the driving circuit 120. In addition, the processing unit may be considered as a component of another onboard device (such as an onboard entertainment system) instead of a part of the vehicle interior lighting system. Exemplarily, a processing unit 210 is integrated into an onboard information entertainment system or an onboard central control system 20 in the following description.

As mentioned above, an RGB LED light (for example, in the form of a flexible high-luminance light diffusing optical fiber) is described as an example of the light 10 provided inside the vehicle. The driving circuit 120 is configured to couple to the onboard information entertainment system or the onboard central control system 20 via a CAN bus to receive a control signal generated by the onboard information entertainment system or the onboard central control system 20, and generate a driving signal for the light 110 based on the control signal. Without departing from the spirit of the invention, the driving circuit 120 may also communicate with the onboard information entertainment system or the onboard central control system 20 in other manners, such as via a LIN bus or in a wireless communication manner, provided that information can be transmitted between the driving circuit 120 and the onboard information entertainment system or the onboard central control system 20 in the vehicle. In this embodiment, the control signal is generated from a configuration parameter for an environment mode of the light. For example, a user may select the configuration parameter through an APP on a smartphone and send the configuration parameter to the processing unit 210 of the onboard entertainment system or the onboard central control system 20, or may directly select the configuration parameter on a human-machine interface 220 of the onboard entertainment system or the onboard central control system 20.

In this embodiment, the environment mode may comprise at least one of the following: a monochrome mode, a breathing mode, a streamer mode, and a rhythm mode. Each environment mode has a respective configuration parameter. Other environment modes not listed herein but that can be implemented by configuring a parameter of the light should also be covered by the invention.

For example, a configuration parameter for the monochrome mode comprises a colour and luminance of the light. The user may select the desired colour and luminance on an APP interface of the smartphone or the human-machine interface of the onboard entertainment system or the onboard central control system 20, and then the processing unit 210 may determine a corresponding RGB value according to the selected colour and luminance and thereby determine an operating current of the light. The determined operating current is comprised in a control command to be sent to the driving circuit 120, and the driving circuit generates a corresponding driving signal based on the control signal and outputs the driving signal to the light 110, thereby providing a lighting effect desired by the user.

For example, a configuration parameter for the breathing mode comprises a colour, a luminance change level, and a luminance change frequency of the light. The user may select the configuration parameter such as the desired colour, the luminance change level, and the luminance change frequency on an APP interface of the smartphone or the human-machine interface of the onboard entertainment system or the onboard central control system 20, and then the processing unit may determine an operating current of the light and signal timing according to the selected configuration parameter. The determined operating current and signal timing are comprised in a control command to be sent to the driving circuit 120, and the driving circuit generates a corresponding driving signal based on the control signal and outputs the driving signal to the light 110, thereby providing a lighting effect desired by the user.

For example, a configuration parameter for the streamer mode comprises a colour sequence (a colour change sequence), luminance for each colour, and a colour switching frequency of the light. The user may select the configuration parameter such as the desired colour sequence, the luminance for each colour, and the colour switching frequency on an APP interface of the smartphone or the human-machine interface of the onboard entertainment system or the onboard central control system 20, and then the processing unit may determine an operating current of the light and signal timing according to the selected configuration parameter. The determined operating current and signal timing are comprised in a control command to be sent to the driving circuit 120, and the driving circuit generates a corresponding driving signal based on the control signal and outputs the driving signal to the light 110, thereby providing a lighting effect desired by the user.

For example, a configuration parameter for the rhythm mode comprises at least one of the following: a colour, a colour change frequency, luminance, and a luminance change frequency of the light. As an example, in this mode, the colour is determined by a tone of music played by a vehicle audio system, the luminance is determined by loudness of the music played by the vehicle audio system, and the colour change frequency and the luminance change frequency are determined by a rhythm of the music played by the vehicle audio system. It should be understood that the colour may also be determined by other factors, such as a type of music being played. Similarly, the luminance, the colour change frequency, and the luminance change frequency may also be determined by other factors.

According to the vehicle interior lighting system illustrated in the invention, the light can show different atmospheres according to the environment mode. In the monochrome mode, based on the colour and luminance selected by the user, a lighting effect of the light can conform to the user's expectation, thereby creating an atmosphere desired by the user. Similarly, in the breathing mode, the streamer mode, and the rhythm mode, the light can create, based on different parameters selected by the user, the atmosphere desired by the user. The light in this example may be a light group comprising more than one light. For example, in the case of the RGB LED light, the light group may be an LED light strip, which is, for example, formed inside the vehicle as a part of the interior.

FIG. 2 is a flowchart of a method for controlling a light provided inside a vehicle according to another embodiment of the invention. For example, this embodiment is implemented by means of the vehicle interior lighting system described above with reference to FIG. 1. However, it should be understood that the method shown in FIG. 2 is not limited to a specific device.

As shown in FIG. 2, in step 210, a processing unit (which may, for example, be a part of the vehicle interior lighting system or integrated into other onboard devices) receives a configuration parameter for an environment mode of the light. For example, the environment mode may comprise a monochrome mode, a breathing mode, a streamer mode, and a rhythm mode. A configuration parameter for each mode is described above and will not be described herein again.

In this embodiment, configuration parameters for the monochrome mode, the breathing mode, and the streamer mode may be selected by a user on an APP interface of a smartphone or a human-machine interface of an onboard entertainment system or an onboard central control system 20, and a configuration parameter for the rhythm mode is determined according to music played by a vehicle audio system.

Then, in step 220, the processing unit generates a control signal from the configuration parameter. The control signal may include, for example, an operating current of the light and signal timing.

Next, in step 230, a driving circuit controls an operating state of the light 110 based on the control signal to achieve a lighting effect desired by the user.

According to the vehicle interior lighting system illustrated in the invention and/or the method for controlling a light provided on a vehicle in the invention, a light provided inside the vehicle, for example, can exhibit different lighting effects according to the user's selection and create an atmosphere inside the vehicle, thereby improving driving experience and upgrading the vehicle. This is incomparable by the current single working mode in which an interior light is only used as a light.

The embodiments and examples proposed herein are provided to describe as adequately as possible embodiments according to the technology and specific applications thereof and enable a person skilled in the art to implement and use the invention. However, a person skilled in the art will know that the foregoing descriptions and examples are provided only for description and illustration. The proposed description is not intended to cover all aspects of the invention or limit the invention to the disclosed precise forms.

In view of the above, the scope of the present disclosure is defined by the following claims.

## Claims

1. A method for controlling a light provided on a vehicle, **characterized by** comprising the following steps:
receiving a configuration parameter for an environment mode of the light;
generating a control signal from the configuration parameter; and
controlling an operating state of the light based on the control signal.

2. The method according to claim 1, wherein the light is a light capable of emitting rays in three primary colours.

3. The method according to claim 2, wherein the light is an LED light.

4. The method according to claim 1 or 2, wherein the light is a light group comprising more than one light.

5. The method according to claim 1 or 2, wherein the environment mode comprises at least one of the following: a monochrome mode, a breathing mode, a streamer mode, and a rhythm mode.

6. The method according to claim 1 or 2, wherein a configuration parameter for the monochrome mode comprises a colour and luminance of the light.

7. The method according to claim 1 or 2, wherein a configuration parameter for the breathing mode comprises a colour, a luminance change level, and a luminance change frequency of the light.

8. The method according to claim 1 or 2, wherein a configuration parameter for the streamer mode comprises a colour sequence, luminance for each colour, and a colour switching frequency of the light.

9. The method according to claim 1 or 2, wherein a configuration parameter for the rhythm mode comprises at least one of the following: a colour, a colour change frequency, luminance, and a luminance change frequency of the light.

10. The method according to claim 8, wherein the colour of the light is determined by a tone of music played by a vehicle audio system, and/or the luminance is determined by loudness of the music played by the vehicle audio system, and/or the colour change frequency and the luminance change frequency are determined by a rhythm of the music played by the vehicle audio system.

11. The method according to claim 1 or 2, wherein the light is provided inside the vehicle.

12. A lighting system for a vehicle, **characterized by** comprising:
a light provided on the vehicle; and
a driving circuit coupled to the light and configured to generate a driving signal for the light based on an external control signal,
wherein the control signal is generated from a configuration parameter for an environment mode of the light.

13. The lighting system according to claim 12, wherein the light is a light capable of emitting rays in three primary colours.

14. The lighting system according to claim 13, wherein the light is an LED light.

15. The lighting system according to claim 12, wherein the driving circuit receives the control signal generated by the onboard information entertainment system.

16. The lighting system according to claim 12, wherein the environment mode comprises at least one of the following: a monochrome mode, a breathing mode, a streamer mode, and a rhythm mode.

17. The lighting system according to claim 16, wherein a configuration parameter for the monochrome mode comprises a colour and luminance of the light.

18. The system according to claim 16, wherein a configuration parameter for the breathing mode comprises a colour, a luminance change level, and a luminance change frequency of the light.

19. The lighting system according to claim 16, wherein a configuration parameter for the streamer mode comprises a colour sequence, luminance for each colour, and a colour switching frequency of the light.

20. The system according to claim 16, wherein a configuration parameter for the rhythm mode comprises at least one of the following: a colour, a colour change frequency, luminance, and a luminance change frequency of the light, wherein the colour is determined by a tone of music played by a vehicle audio system, the luminance is determined by loudness of the music played by the vehicle audio system, and the colour change frequency and the luminance change frequency are determined by a rhythm of the music played by the vehicle audio system.

21. The system according to claim 12 or 13, wherein the light is provided inside the vehicle.
